# EUROPÄISCHE PATENTANMELDUNG

(11) **EP 1 460 242 A2**
(43) Veröffentlichungstag der Anmeldung: **22.09.2004**
(21) Anmeldenummer: 04012887.8
(22) Anmeldetag: 30.01.2002
(51) Int. Cl.: F01M 13/04

(54) **Entlüftungsrohr zur Entlüftung des Kurbelgehäuses eines Verbrennungsmotors**

(30) Priorität: 09.04.2001 DE 10118771
(62) Teilanmeldung aus: 02002303.2
(71) Anmelder: WOCO Industrietechnik GmbH, 63628 Bad Soden-Salmünster (DE); Dr.Ing. h.c.F. Porsche Aktiengesellschaft, 70435 Stuttgart (DE); MAHLE Filtersysteme GmbH, 70376 Stuttgart (DE)
(72) Erfinder: Wunderlich, Arno, 71067 Sindelfingen (DE); Dieterle, Frank, 71254 Ditzingen (DE); Krüger, Klaus-Peter, 71739 Oberriexingen (DE); Wasserbäch, Thomas, 75210 Keltern (DE); Gschwindt, Werner, 75447 Sternenfels (DE); Kelm, Joachim, 75177 Pforzheim (DE); Winter, Hartmut, 63633 Birstein (DE); Strauss, Klemens, 98733 Frammersbach (DE); Ritzke, Sven, 63549 Ronnenburg (DE); Fischer, Oliver, 71348 Weinstadt (DE); Morgillo, Ivano, 74214 Bieringen (DE); Schweikert, Klaus, 74182 Obersulm (DE); Stehlig, Jürgen, 72666 Neckartailfingen (DE)
(74) Vertreter: Weber-Bruls, Dorothée, Dr.

(57) **Zusammenfassung**

Die Erfindung betrifft ein Entlüftungsrohr zur Entlüftung des Kurbelgehäuses eines Verbrennungsmotors, das mit zumindest einem Heizelement in Wirkverbindung steht, wobei zwischen einem Metallteil und einem Kunststoff zumindest ein das Metallteil zumindest bereichsweise umgebendes Element aus elastischem Material angeordnet ist, welches das Heizelement elastisch abdichtet.

## Beschreibung

Die vorliegende Erfindung betrifft ein Entlüftungsrohr zur Entlüftung des Kurbelgehäuses eines Verbrennungsmotors, das mit zumindest einem Heizelement in Wirkverbindung steht.

Bei Montagelösungen von Kunststoff auf Metallteilen besteht das Problem, daß durch die unterschiedlichen Wärmeausdehnungskoeffizienten im Betriebstemperaturbereich Spalte zwischen dem Kunststoff und dem Metallteil entstehen. Diese Spalte, wenn auch nur sehr klein, ermöglichen einen Eintritt eines Mediums, wie insbesondere Wasser, Öl, Bremsflüssigkeit, basische, ätzende und/oder fluide organische Stoffe, insbesondere Frostschutz- und/oder Reinigungsmittel, beinhaltende Flüssigkeiten, Kraftstoff, Verbrennungsrückstände oder dergleichen.

Im konkreten Fall eines Entlüftungsrohres zur Entlüftung des Kurbelgehäuses eines Verbrennungsmotors hat solch eine Undichtigkeit bereits schon zu Kurzschlüssen bis hin zu kompletten Kabelbränden geführt. Derartige Entlüftungsrohre bestehen üblicherweise aus einem Kupferrohr umgeben von Kunststoff, wobei zwischen das Kupferrohr und den Kunststoff Öl, Wasser und Verbrennungsrückstände, wie schwefelhaltige Substanzen, durch Kapillarwirkung eindringen können. Dadurch können Kriechströme fließen, die zu Kurzschlüssen bzw. Widerstandsreduzierungen bei üblicherweise vorhandenen Heizelementen in Form von PTC (Positive Temperature Coefficient)-Widerständen führen.

Der Erfindung liegt somit die Aufgabe zugrunde, das gattungsgemäße Entlüftungsrohr derart weiterzuentwickeln, daß die Nachteile des Stands der Technik überwunden werden.

Diese Aufgabe wird erfindungsgemäß dadurch gelöst, daß zwischen einem Metallteil und einem Kunststoff zumindest ein das Metallteil zumindest bereichsweise umgebendes Element aus elastischem Material angeordnet ist, welches das Heizelement elastisch abdichtet.

Dabei kann vorgesehen sein, daß das zumindest eine Element eine Vorspannung auf dem Metallteil aufweist.

Ferner wird mit der Erfindung vorgeschlagen, daß das Metallteil zumindest im Bereich des zumindest einen Elements eine Oberflächenstruktur, insbesondere in Form zumindest einer Nut zur zumindest teilweisen Aufnahme des zumindest einen Elements, aufweist.

Zudem wird mit der Erfindung vorgeschlagen, daß das zumindest eine Element die Form eines Rings, insbesondere O-Rings, aufweist.

Ausführungsformen der Erfindung sind dadurch gekennzeichnet, daß die Oberflächenstruktur des Metallteils, insbesondere die zumindest eine Nut, dem Querschnitt des zumindest einen Elements, insbesondere in Form zumindest eines Rings, im wesentlichen angepaßt ist.

Bevorzugt ist erfindungsgemäß, daß das zumindest eine Heizelement zwischen O-ringförmigen Elementen angeordnet ist.

Gemäß der Erfindung wird auch vorgeschlagen, daß das zumindest ein Heizelement ein PTC-Widerstand ist.

Dabei kann vorgesehen sein, daß das Entlüftungsrohr eine abgeplattete Seite aufweist, und der zumindest ein PTC-Widerstand scheibenförmig ausgestaltet ist sowie direkt an der abgeplatteten Seite anliegt.

Schließlich wird mit der Erfindung auch vorgeschlagen, daß das elastische Material bei Kontaktierung mit Wasser, Öl, Bremsflüssigkeit, basischen, ätzenden und/oder fluide organische Stoffe, insbesondere Frostschutz- und/oder Reinigungsmittel, beinhaltenden Flüssigkeiten, Kraftstoff und/oder Verbrennungsrückständen aufquellbar ist und/oder Silikon umfaßt.

Der Erfindung liegt die überraschende Erkenntnis zugrunde, daß durch die Anordnung eines Elements aus einem elastischen Material zwischen dem Metallteil und dem Kunststoff eines Entlüftungsrohrs eine dauerhaft dichte Montage gewährleistet wird.

Das erfindungsgemäße Entlüftungsrohr weist mehrere Vorteile auf:
1. Es ist keine Werkzeugänderung erforderlich.
2. Das elastische Element ist von außen nicht sichtbar und keinem direkten Kontakt mit einem Medium ausgesetzt. Lediglich die Enden des Elementes können mit dem Medium in Berührung treten, wobei aber durch Quellung bei Kontakt mit dem Medium eine zusätzliche Abdichtung erfolgt.
3. Eine lokal große Abdichtwirkung kann auch dadurch erzielt werden, daß das Metallteil Nuten aufweist, in welche ein elastisches Element in Form eines O-Rings eingesetzt wird.
4. Vorteilhaft ist der Einsatz O-ringförmiger Elemente in Kombination mit elektronischen Bauelementen, wobei die elektronischen Bauelemente jeweils zwischen O-Ringen angeordnet sein sollten, um eine Abdichtung zu gewährleisten.

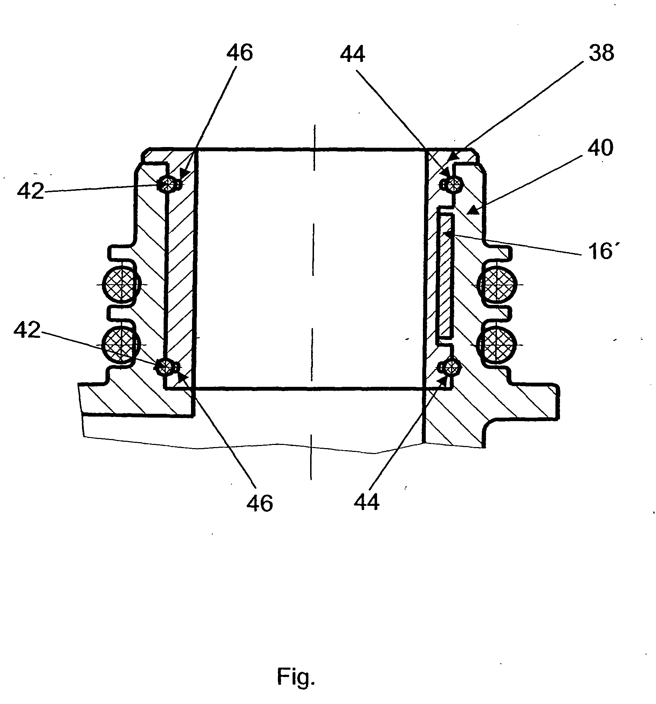

Weitere Merkmale und Vorteile der Erfindung ergeben sich aus der nachstehenden Beschreibung, in der ein Ausführungsbeispiel der Erfindung anhand einer aus einer einzigen Figur bestehenden schematischen Zeichnung im Einzelnen erläutert ist. Dabei zeigt die Figur eine Schnittansicht durch einen Teil eines erfindungsgemäßen Entlüftungsrohrs.

Die Figur zeigt einen Teil eines Entlüftungsrohrs zur Entlüftung eines nicht dargestellten Kurbelgehäuses eines Verbrennungsmotors in Schnittansicht. Das Entlüftungsrohr weist ein Metallteil in Form eines Metallrohrs 38 auf, welches mit einem Kunststoff 40 umgeben ist, wobei zwischen dem Kunststoff 40 und dem Metallrohr 38 ein PTC-Widerstand 16' angeordnet ist. Das Metallrohr 38 weist Nuten 42 auf, in welchen sich elastische Elemente in Form von O-Ringen 44 zumindest teilweise befinden, und zwar derart, daß der PTC-Widerstand 16' zwischen den O-Ringen 44 angeordnet ist, um eine Abdichtung zu gewährleisten. Die Nuten 42 sind so ausgeformt, daß sie weitestgehend dem Querschnitt der O-Ringe 44 entsprechen. Jedoch sind innerhalb der Nuten 42 Freiräume 46 vorhanden, welche bei der Montage der O-Ringe 44 zunächst frei bleiben. Kommt es zu einem späteren Zeitpunkt aufgrund von Temperaturschwankungen zu einer Ausdehnung des Kunststoffs 40, so reichen die in den O-Ringen 44 vorhandenen Rückstellkräfte aus, um stets eine ausreichende Abdichtung zwischen dem Metallrohr 38 und dem Kunststoff 40 sicherzustellen, da die O-Ringe 44 aufgrund ihrer Ausdehnung in die mit Luft gefüllten Freiräume 46 "atmen" können.

Die in der vorstehenden Beschreibung, in den Ansprüchen sowie Zeichnungen offenbarten Merkmale der Erfindung können sowohl einzeln, als auch in jeder beliebigen Kombination für die Verwirklichung der Erfindung in ihren verschiedenen Ausführungsformen wesentlich sein.

### Bezugszeichenliste

- 16': PTC-Widerstand
- 38: Metallrohr
- 40: Kunststoff
- 42: Nut
- 44: O-Ring
- 46: Freiraum

## Patentansprüche

1. Entlüftungsrohr zur Entlüftung des Kurbelgehäuses eines Verbrennungsmotors, das mit zumindest einem Heizelement (16') in Wirkverbindung steht, **dadurch gekennzeichnet, daß**
zwischen einem Metallteil (38) und einem Kunststoff (40) zumindest ein das Metallteil (38) zumindest bereichsweise umgebendes Element (44) aus elastischem Material angeordnet ist, welches das Heizelement (16') elastisch abdichtet.

2. Entlüftungsrohr nach Anspruch 1, **dadurch gekennzeichnet, daß**
das zumindest eine Element (44) eine Vorspannung auf dem Metallteil (38) aufweist.

3. Entlüftungsrohr nach Anspruch 1 oder 2, **dadurch gekennzeichnet, daß**
das Metallteil (38) zumindest im Bereich des zumindest einen Elements (44) eine Oberflächenstruktur, insbesondere in Form zumindest einer Nut (42) zur zumindest teilweisen Aufnahme des zumindest einen Elements (44), aufweist.

4. Entlüftungsrohr nach einem der vorangehenden Ansprüche, **dadurch gekennzeichnet, daß**
das zumindest eine Element die Form eines Rings, insbesondere O-Ringes (44), aufweist.

5. Entlüftungsrohr nach Anspruch 3 oder 4, **dadurch gekennzeichnet, daß**
die Oberflächenstruktur des Metallteils (38), insbesondere die zumindest eine Nut (42), dem Querschnitt des zumindest einen Elements (44), insbesondere in Form zumindest eines Rings (44), im wesentlichen angepaßt ist.

6. Entlüftungsrohr nach Anspruch 4 bis 5, **dadurch gekennzeichnet, dass**
das zumindest eine Heizelement (16') zwischen O-ringförmigen Elementen (44) angeordnet ist.

7. Entlüftungsrohr nach einem der vorangehenden Ansprüche, **dadurch gekennzeichnet, daß**
das zumindest eine Heizelement ein PTC-Widerstand (16') ist.

8. Entlüftungsrohr nach Anspruch 7, **dadurch gekennzeichnet, daß**
das Entlüftungsrohr eine abgeplattete Seite aufweist, und der zumindest eine PTC-Widerstand (16') scheibenförmig ausgestaltet ist sowie direkt an der abgeplatteten Seite anliegt.

9. Entlüftungsrohr nach einem der vorangehenden Ansprüche, **dadurch gekennzeichnet, daß**
das elastische Material bei Kontaktierung mit Wasser, Öl, Bremsflüssigkeit, basischen, ätzenden und/oder fluide organische Stoffe, insbesondere Frostschutz- und/oder Reinigungsmittel, beinhaltenden Flüssigkeiten, Kraftstoff und/oder Verbrennungsrückständen aufquellbar ist und/oder Silikon umfaßt.
